# EUROPEAN PATENT SPECIFICATION

(11) **EP 4 155 165 B1**
(45) Date of publication and mention of the grant of the patent: **04.06.2025**
(21) Application number: 21893565.8
(22) Date of filing: 23.09.2021
(51) Int. Cl.: B61L 25/02, B61L 25/04, B61L 27/00, B61L 15/00, B61L 1/14, B61L 3/12

(54) **TRAIN INTEGRITY MONITORING APPARATUS AND METHOD BASED ON RFID TECHNOLOGY**
ZUGINTEGRITÄTSÜBERWACHUNGSVORRICHTUNG UND -VERFAHREN AUF DER BASIS VON RFID-TECHNOLOGIE
APPAREIL ET PROCÉDÉ DE SURVEILLANCE D'INTÉGRITÉ DE TRAIN REPOSANT SUR UNE TECHNOLOGIE RFID

(30) Priority: 19.11.2020 CN 202011305305
(43) Date of publication of application: 29.03.2023
(73) Proprietor: CASCO SIGNAL LTD., Shanghai 200071 (CN)
(72) Inventor: CHENG, Jiajia, Shanghai 200071 (CN); WANG, Tao, Shanghai 200071 (CN); NA, Jiqing, Shanghai 200071 (CN)
(74) Representative: Sun, Yiming
(86) International application number: PCT/CN2021/119761
(87) International publication number: WO 2022/105414

(56) References cited:
- EP-B1- 3 458 333
- CN-A- 107 310 591
- CN-A- 108 839 677
- CN-A- 108 839 677
- CN-A- 110 745 162
- CN-A- 112 429 042
- DE-A1- 102004 057 545
- GB-B- 2 560 581
- US-A1- 2017 043 797

## Description

### TECHNICAL FIELD

The disclosure relates to a train integrity detection device and a train integrity detection method, both based on an RFID technology.

### BACKGROUND

Train integrity detection refers to use of all kinds of equipment in the train operation process to detect the integrity of a train, that is, to detect whether the train is unhooked and uncoupled. If the train is unhooked and uncoupled, whether the train is unhooked cannot be judged on the basis of an existing interval track circuit, thus a train control system certainly will allow other subsequent trains to continue to move forwards, resulting in serious accidents such as train rear-end accidents. Therefore, the judgment of the train integrity plays an important role in on-board ATP control. Main methods for existing train integrity inspection mainly adopts the following technologies:
(a) mounting air pressure monitoring equipment and wireless communication equipment at the tail of the train, so as to complete the train integrity inspection by monitoring the air pressure of an air pipe in real time;
(b) mounting axle counter equipment on the trackside, and checking the number of wheels of the train that pass the two pieces of axle counter equipment, so as to realize the train integrity inspection;
(c) realizing the train integrity inspection by detecting the length and speed change of the train in real time by means of satellite navigation and inertial navigation equipment; and
(d) realizing the train integrity inspection by detecting the length and air pressure change of the train in real time by means of comprehensive application of satellite navigation and positioning and train tail air pressure equipment.

At present, these technologies for detecting the train integrity are mainly completed by mounting a safety protection device (train tail device) at the tail of the train or mounting the axle counter equipment on the trackside. Generally, the train tail device is composed of a host mounted at the tail of the train and a control box in a cab, can detect the air pressure of the air pipe at the tail of the train in real time, and can feed back air pressure information to the control box in real time. However, the train tail device has the following problems in the use process: an existing or new wireless train dispatching telephone has no reserved interface for the control box, resulting in difficulty in mounting; improper use of the operating frequency of the wireless train dispatching telephone causes mutual interference between the host of the train tail device in a hub and the wireless train dispatching telephone, which affects the train operation; and the train tail device has the low air pressure detection frequency, which cannot guarantee the real time of the train integrity detection. In addition, detecting the train integrity by mounting the axle counter equipment on the trackside and calculating the number of the wheels of the train passing the equipment also has the problems of high fault rate of the axle counter equipment, difficulty in maintenance and high cost. Besides, currently popular satellite navigation and positioning and inertial navigation technologies which are used to detect the train integrity have the problems that blind areas exist in satellite navigation and positioning and the accuracy cannot be ensured to reach 100%. Especially for some local freight railways at present, freight trains are not fixed in train formation, if train tail devices are mounted routinely, it is necessary to specially increase corresponding personnel to complete mounting of the train tail devices and mounting of interfaces of air pipes of the train with the train tail devices, which is high in requirement for the personnel quality, and relevant personnel need to be specially trained and set, which certainly will lead to the increase in user cost.

Document US 2017 043 797 A1 discloses a train integrity detection device based on a trackside mounted tag and tag readers at the head and at the end of the train.

### SUMMARY

The present disclosure aims to overcome the above defects of the prior art to provide a train integrity detection device based on an RFID technology and a corresponding method, which further improves the safety of a system and ensures the accuracy and safety of detection results.

The present invention is defined by the features of the independent claims. Preferred embodiments are defined by the features of the dependent claims.

As the preferred technical solution, the train integrity detection system must calculate, after receiving the train head and tail RFID electronic tag information sent by the two RFID readers in one group on the ground, the train length respectively according to head and tail RFID electronic tag data fed back by the two RFID readers and an actual interval Tb.

As the preferred technical solution, the train length is calculated as follows:
L1w=LC1s-LC1w, and L2w=LC2s-LC2w, wherein
L1w represents the train length calculated by the first RFID reader in one group, L2w represents the train length calculated by the second RFID reader in the group, LC1s represents a mileage value when the first RFID reader in the first group reads the RFID electronic tag at the head of the train, LC1w represents a mileage value when the first RFID reader in the first group reads the RFID electronic tag at the tail of the train, LC2s represents a mileage value when the second RFID reader in the first group reads the RFID electronic tag at the head of the train, and LC2w represents a mileage value when the second RFID reader in the first group reads the RFID electronic tag at the tail of the train; and
only when the train length calculated by the two feedback RFID electronic tags is complete, the train is considered to meet the integrity detection.

As the preferred technical solution, the RFID electronic tags are mounted on two sides of the carriages and are mounted at the height matching the mounting height of the RFID readers; or the RFID electronic tags are mounted on the trackside and should be higher than lowest edges of carriage bodies of the carriages.

As the preferred technical solution, the RFID readers are mounted in the track center, and the RFID electronic tags are mounted in the bottom center of a vehicle.

As the preferred technical solution, contents of identification data stored in each of the RFID electronic tags include tag IDs, line codes, area codes, station codes and speed level information.

As the preferred technical solution, received electronic tags are sent by the RFID readers to a ground train control center system and then are sent to the train integrity detection system by the ground train control center system.

As the preferred technical solution, making first pre-judgment by the TMIS on whether the train is integral currently in Step (3) specifically comprises:
judging, by the TMIS, whether a head locomotive number and a tail carriage number corresponding to the two electronic tag numbers of the head and tail of the train that are read by the RFID reader 1 belong to the head and tail of the current train according to the information stored in the database, calculating the train length according to a displacement value during the two times of pressing, and comparing the train length with the actual train length.

As the preferred technical solution, making second pre-judgment by the TMIS on whether the train is integral currently in Step (6) specifically comprises:
making judgment by the TMIS on whether a head locomotive number and a tail carriage number corresponding to the two electronic tag numbers of the head and tail of the train that are read by the RFID reader 2 belong to the head and tail of the current train according to the information stored in the database, calculating the train length according to a displacement value during the two times of pressing, and comparing the train length with the actual train length.

Compared with the prior art, the present disclosure has the following advantages:
(1) detection of the train integrity is achieved by means of the present disclosure by mounting ground RFID read-write equipment and train vehicle electronic tags, and the technical solutions are high in system reliability and availability;
(2) the present disclosure is simple in realization principle, and since a group of two sets of ground RFID read-write equipment are used to detect the train integrity simultaneously, the technical safety of the solutions is further improved;
(3) with regard to the present disclosure, the number and mounting positions of the RFID read-write equipment mounted on the ground can be flexibly adjusted according to the actual locomotive tracking density, and thus the system is flexible in solution and high in practicability; and
(4) The present disclosure can realize tracking of all the locomotives and vehicles while realizing the train integrity detection, and can also realize automatic identification of all the vehicles by means of the system, which can replace an existing train number identification system.

### BRIEF DESCRIPTION OF THE DRAWINGS

FIG. 1 is a flow chart of a method of the present disclosure;
FIG. 2 is an internal structure diagram of ground RFID read-write equipment of the present disclosure;
FIG. 3 is a schematic diagram of mounting electronic tags at the bottom of a train of the present disclosure; and
FIG. 4 is a schematic diagram of mounting electronic tags on sides of the train of the present disclosure.

### DETAILED DESCRIPTION OF THE EMBODIMENTS

The technical solution in an embodiment of the present disclosure will be described clearly and completely below in conjunction with the accompanying drawings in the embodiment of the present disclosure. Obviously, the described embodiment is a part of embodiments of the present disclosure, not all of them. On the basis of the embodiment of the present disclosure, all other embodiments obtained by the person of ordinary skill in the art without involving any inventive effort should fall within the scope of protection of the present disclosure.

The present disclosure provides a solution for detecting the train integrity by means of an RFID technology. The solution is easy to realize and convenient to mount and maintain, and there is no need to specially set technicians to mount train tail equipment, which reduces the labor cost and the later maintenance cost. In the solution, a group of two sets of ground RFID read-write equipment is used to ensure the accuracy and the reliability of read train head and tail vehicle electronic tags, so as to further improve the safety of a system and ensures the accuracy and safety of detection results.

The solution of the present disclosure comprises mounting the RFID read-write equipment on a ground track, if the ground RFID read-write equipment is mounted on the whole line, the design and construction costs are excessively high, and thus the main features of the technical solution are as follows:
(1) the solution mainly comprises the electronic tags (TAG) and the ground read-write equipment (wireless transceiver modules, antennas, control modules, communication units and power supplies);
(2) contents of identification data stored in the electronic tags include tag IDs, line codes, area codes, station codes and speed levels;
(3) ground RFID readers are mounted and arranged at tunnel entrances, station entrances and exits and some special areas according to site requirements;
(4) locomotive electronic tags are mounted on bottom cross rails of locomotives and vehicles, or are mounted on side surfaces of the locomotives and the vehicles;
(5) read electronic tag numbers of locomotive tag numbers and vehicle tail carriage tag numbers should be input, by a handheld card reader, to a system before the locomotives run;
(6) the RFID read-write equipment is mounted between sleepers of the ground track or on the trackside;
(7) the equipment adopts the integrated design, supports external AC220V DC power supply, and is arranged at the tunnel entrances, the station entrances and exits and some special areas of a line;
(8) the RFID read-write equipment mounted on the ground track or the trackside reads the electronic tags at the head and tail of a train, and then sends read information to a train integrity detection system (TMIS) of the locomotive by means of the communication units of the equipment; and the TMIS calculates the train length according to stored locomotive and tail carriages corresponding to the electronic tags, received interval time sent by the electronic tags at the locomotive and the tail of the same train and the current speed and displacement of the train, so as to calculate the integrity of the train;
(9) the TMIS must calculate, after receiving the train head and tail electronic tag information sent by the two pieces of RFID read-write equipment in one group on the ground, the train length Lw in meters respectively according to head and tail electronic tag data fed back by the two RFID readers and an actual interval Tb (L1w=LC1s- Lc1w, and L2w=LC2s- LC2w, wherein L1w represents the train length calculated by the first reader in one group, L2w represents the train length calculated by the second reader in the group, LC1s represents a mileage value when the first reader in the first group reads the tag at the head of the train, LC1w represents a mileage value when the first reader in the first group reads the tag at the tail of the train, LC2s represents a mileage value when the second reader in the first group reads the tag at the head of the train, and LC2w represents a mileage value when the second reader in the first group reads the tag at the tail of the train; and it is considered that transmission delay time Td of the two read data of the head and the tail can cancel each other and therefore can be omitted in the calculation formulas), only when the train length calculated by the two feedback electronic tags is complete, the train is considered to meet the integrity detection, and otherwise, a train integrity missing alarm is sent to an on-board ATP; and
(10) the electronic tags are mounted on the locomotives and vehicles in the following two manners: (1) the electronic tags are mounted at the bottoms of the locomotives and the vehicles; and (2) the electronic tags are mounted on the side surfaces of the locomotives and the vehicles.

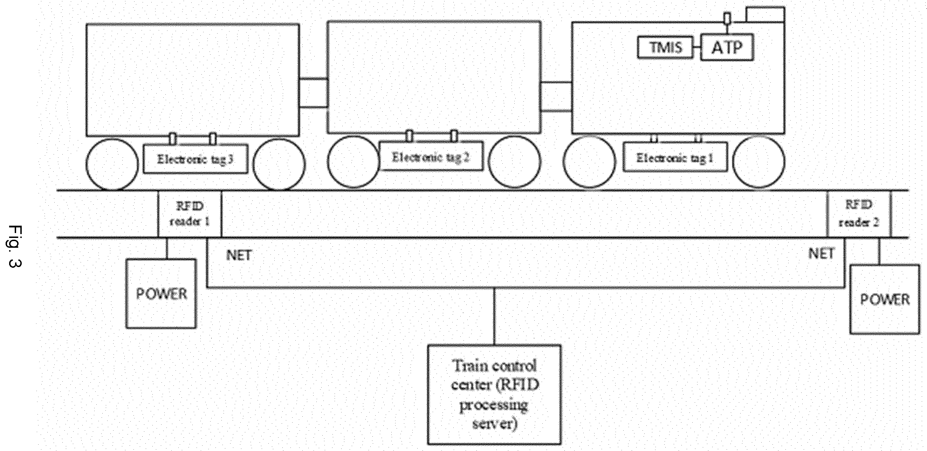

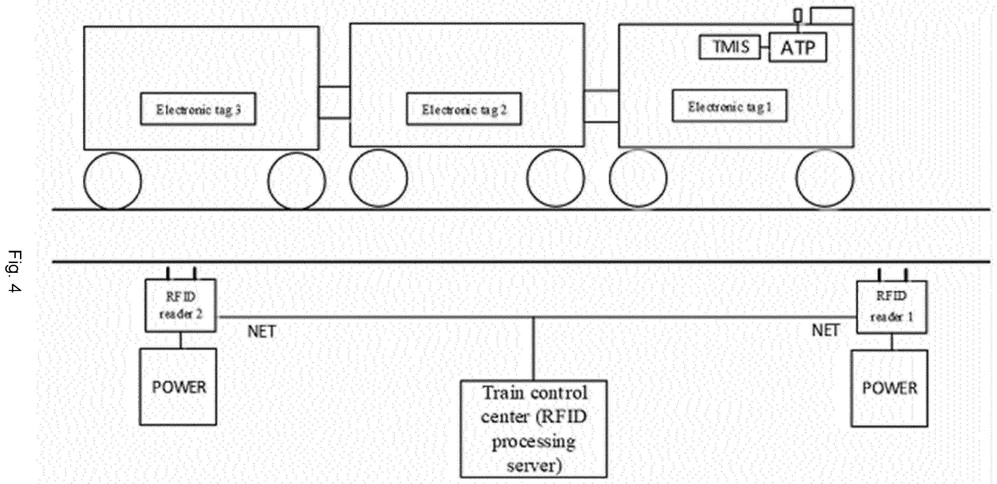

The RFID electronic tags and the readers are mounted in the following two manners:
(1) the RFID electronic tags are mounted on two sides of the carriages (with the mounting height matching that of the RFID readers and within the readable ranges of the RFID readers), and the RFID readers are mounted on the trackside and should be higher than lowest edges of carriage bodies of the carriages; the RFID readers are powered by trackside power supplies and are connected to the center by means of wired network channels, so as to send the received RFID electronic tags to a central processing server, the central processing server processes all the received tags and calculates the read-write interval time of the electronic tags at the head and the tail of the same locomotive and the length, so as to figure out the integrity state of the train, and the state is sent to a trackside control center, as shown in FIG. 3; and
(2) the RFID readers are mounted in the track center, and the RFID electronic tags are mounted in the bottom centers of the vehicles. The mounting positions and intervals can be set according to the actual train operation interval time and distance on the specific site, as shown in FIG. 4.

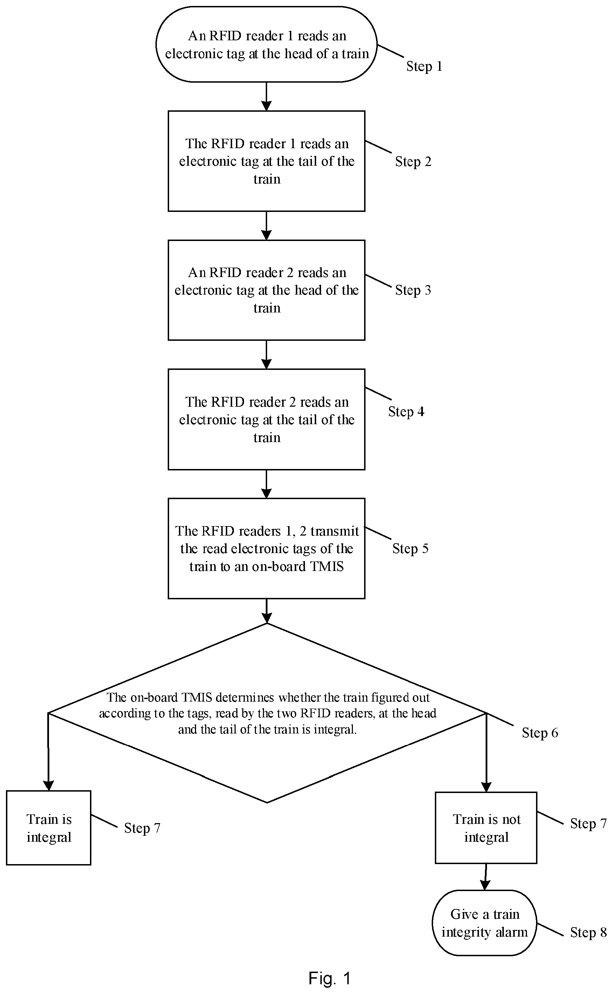

As shown in FIG. 1, the RFID readers mounted on the ground track or the trackside read the electronic tags at the head and tail of the train, and then send the read information to the on-board train integrity detection system (TMIS) of the locomotive by means of the communication units of the readers, and the TMIS calculates the train length according to the stored locomotive and tail carriages corresponding to the electronic tags, the received interval time sent by the electronic tags at the locomotive and the tail of the same train and the current speed and displacement of the train, and calculates the integrity of the train according to the actual train length; and the process comprises the following steps:
Step 1, when the head of the train presses the RFID reader 1 arranged on the ground, sending, by the ground RFID reader 1, the electronic tag number of the head of the train to an RFID processing server of the ground train control center system, then transmitting the electronic tag number to the on-board train integrity detection system (TMIS) by means of an RBC, and acquiring, by the TMIS, train head locomotive information according to train information, corresponding to the electronic tag number, in a database and recording the speed, displacement and time of the current train;
Step 2, when the tail of the train presses the RFID reader 1 arranged on the ground, sending, by the ground RFID reader 1, the electronic tag number of the head of the train to the ground train control center system, then transmitting the electronic tag number to the on-board train integrity detection system (TMIS), and acquiring, by the TMIS, train tail locomotive information according to the train information, corresponding to the electronic tag number, in the database and recording the speed, displacement and time of the current train;
Step 3, making judgment on whether a head locomotive number and a tail carriage number corresponding to the two read electronic tag numbers of the head and tail of the train belong to the head and tail of the current train according to the information stored in the database, calculating the train length according to a displacement value during the two times of pressing, and comparing the train length with the actual train length; and making pre-judgment, by the TMIS according to the two conditions, on whether the train is integral currently;
Step 4, when the head of the train presses the RFID reader 2 arranged on the ground, sending, by the ground RFID reader 2, the electronic tag number of the head of the train to the ground train control center system, then transmitting the electronic tag number to the on-board train integrity detection system (TMIS), and acquiring, by the TMIS, the train head locomotive information according to the train information, corresponding to the electronic tag number, in the database and recording the speed, displacement and time of the current train;
Step 5, when the tail of the train presses the RFID reader 2 arranged on the ground, sending, by the ground RFID reader 2, the electronic tag number of the head of the train to the RFID processing server of the ground train control center system, then transmitting the electronic tag number to the on-board train integrity detection system (TMIS) by means of the RBC, and acquiring, by the TMIS, train tail locomotive information according to train information, corresponding to the electronic tag number, in the database and recording the speed, displacement and time of the current train;
Step 6, making judgment on whether a head locomotive number and a tail carriage number corresponding to the two electronic tag numbers of the head and tail of the train that are read by the RFID readers in a second group belong to the head and tail of the current train according to the information stored in the database, calculating the train length according to a displacement value during the two times of pressing, and comparing the train length with the actual train length; and making pre-judgment, by the TMIS according to the two conditions, on whether the train is integral currently;
Step 7, calculating, by the TMIS, the train integrity state according to values returned by the two groups of RFID readers, with the judgment conditions as follows: if the train integrity judgment is met twice, the train is considered to be integral currently; otherwise, the train is considered to be not integral; and
Step 8, if the train is not integral, sending a train integrity missing alarm to the on-board ATP.

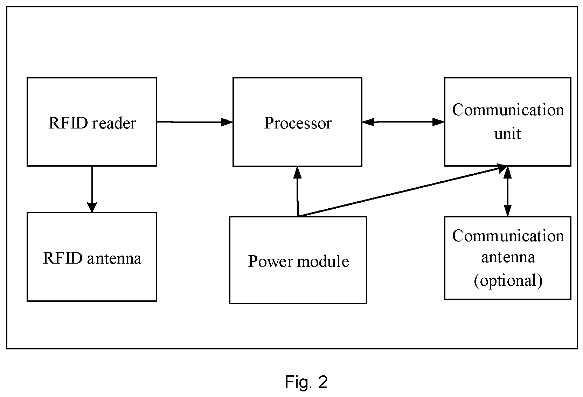

As shown in FIG. 2, the internal structure and working principle of the ground RFID electronic tag read-write equipment are as follows:
(1) the ground RFID electronic tag read-write equipment is composed of the RFID reader, the RFID antenna, the communication unit, a core processor and the power supply;
(2) after the train operates into the range that can be identified by the ground RFID electronic tag read-write equipment, the electronic tag receives a radio frequency signal sent by the reader and sends information, stored in a chip, by means of energy obtained through induction current, the reader decodes the received information and sends the information to the processor, the processor processes the information and then sends the received electronic tag to the ground train control center system by means of the network (in a wired/wireless manner), and then the electronic tag is sent by the RBC to the on-board TMIS; and
(3) the on-board TMIS calculates the integrity of the train after receiving the electronic tag information.

The present disclosure achieves the reliable detection of the train integrity by means of the mature RFID technology and the dual sets of ground RFID readers. The technical solution is simple in design principle, has a few intermediate links, is little disturbed and has few demands for personnel and maintenance, so that the construction and maintenance costs of the system can be greatly reduced under the condition that the demands of the system are met. Meanwhile, the electronic tags of the vehicles of the system can also be used in a train number identification system, so that multi-purpose application of one system is achieved, and the application and construction costs of the system can be further reduced; and the system has been recognized by local railway users at present, and is planned to be applied and promoted in the next step.

The above is only the detailed description of the embodiments of the disclosure, but the scope of protection of the disclosure is defined by the appended claims only.

## Claims

1. A train integrity detection device based on an RFID technology, the device comprising RFID electronic tags mounted to a head carriage and to a tail carriage of a train subject to train integrity detection, the train including a locomotive, RFID readers and a train integrity detection system, wherein
the RFID readers are mounted on a ground track or trackside and are configured to read the RFID electronic tags at the head carriage and tail carriage of a train, and then send read information to a train integrity detection system of the locomotive by means of communication units of the RFID readers; and
the train integrity detection system is configured to calculate the train's length according to stored train head and tail carriages data corresponding to the RFID electronic tags, an interval time defined by reading the RFID electronic tags at the head carriage and tail carriage of the train, and the current speed and displacement of the train, so as to calculate the integrity of the train.

2. The device according to claim 1, wherein the train integrity detection system is configured to calculate, after receiving the train head carriage and tail carriage RFID electronic tag information sent by the two RFID readers forming a group on the ground, the train length respectively according to head carriage and tail carriage RFID electronic tag data fed back by the two RFID readers and an actual interval Tb.

3. The device according to claim 2, wherein the train length is calculated as follows:
L1w=LC1s-LC1w, and L2w=LC2s-LC2w, wherein
L1w represents a train length calculated by a first RFID reader in the group, L2w represents a train length calculated by a second RFID reader in the group, LC1s represents a displacement value when the first RFID reader in the group reads the RFID electronic tag at the head carriage of the train, LC1w represents a displacement value when the first RFID reader in the group reads the RFID electronic tag at the tail carriage of the train, LC2s represents a displacement value when the second RFID reader in the group reads the RFID electronic tag at the head carriage of the train, and LC2w represents a displacement value when the second RFID reader in the group reads the RFID electronic tag at the tail carriage of the train; and
only when the train lengths L1w and L2w are completely calculated, the train is considered to meet the integrity detection.

4. The device according to claim 1, wherein the RFID electronic tags are mounted on two sides of the carriages and are mounted at the height matching the mounting height of the RFID readers; or the RFID electronic tags are mounted on the trackside and should be higher than lowest edges of carriage bodies of the carriages.

5. The device according to claim 1, wherein the RFID readers are mounted in the track center, and the RFID electronic tags are mounted in the bottom center of a vehicle.

6. The device according to claim 1, wherein contents of identification data stored in each of the RFID electronic tags include tag IDs, line codes, area codes, station codes and speed level information.

7. The device according to claim 1, wherein received electronic tags are sent by the RFID readers to a ground train control center system and then are sent to the train integrity detection system by the ground train control center system.

8. A method for using the train integrity detection device based on an RFID technology according to claim 1, the method comprising the steps of:
Step (1), when the RFID reader 1 arranged on the ground reads the RFID electronic tag mounted to the head carriage of the train, sending, by the RFID reader 1, an electronic tag number of the RFID electronic tag mounted to the head carriage of the train to the ground train control center system, then transmitting the electronic tag number to an on-board train integrity detection system (TMIS), and acquiring, by the TMIS, train head locomotive information according to train information, corresponding to the electronic tag number, in a database and recording the speed, displacement and time of the current train;
Step (2), when the RFID reader 1 arranged on the ground reads the RFID electronic tag mounted to the tail of the train, sending, by the ground RFID reader 1, the electronic tag number of the RFID electronic tag mounted to the tail of the train to the ground train control center system, then transmitting the electronic tag number to the on-board train integrity detection system (TMIS), and acquiring, by the TMIS, train tail locomotive information according to the train information, corresponding to the electronic tag number, in the database and recording the speed, displacement and time of the current train;
Step (3), making first pre-judgment by the TMIS on whether the train is integral currently;
Step (4), when the RFID reader 2 arranged on the ground reads the RFID electronic tag mounted to the head carriage of the train, sending, by the ground RFID reader 2, the electronic tag number of the RFID electronic tag mounted to the head carriage of the train to the ground train control center system, then transmitting the electronic tag number to the on-board train integrity detection system (TMIS), and acquiring, by the TMIS, the train head locomotive information according to the train information, corresponding to the electronic tag number, in the database and recording the speed, displacement and time of the current train;
Step (5), when the RFID reader 2 arranged on the ground reads the RFID electronic tag mounted to the tail of the train, sending, by the ground RFID reader 2, the electronic tag number of the RFID electronic tag mounted to the tail of the train to the ground train control center system, then transmitting the electronic tag number to the on-board train integrity detection system (TMIS), and acquiring, by the TMIS, train tail locomotive information according to the train information, corresponding to the electronic tag number, in the database and recording the speed, displacement and time of the current train;
Step (6), making second pre-judgment by the TMIS on whether the train is integral currently;
Step (7), calculating, by the TMIS, the train integrity state according to values returned by the two RFID readers, with the judgment conditions as follows: if the train integrity judgment is met twice, the train is considered to be integral currently; otherwise, the train is considered to be not integral; and
Step (8), if the train is not integral, sending a train integrity missing alarm to an on-board ATP.

9. The method according to claim 8, wherein making first pre-judgment by the TMIS on whether the train is integral currently in Step (3) specifically comprises:
judging, by the TMIS, whether a head locomotive number and a tail carriage number corresponding to the two electronic tag numbers of the RFID electronic tags mounted to the head carriage and tail carriage of the train that are read by the RFID reader 1 belong to the head carriage and tail carriage of the current train according to the information stored in the database, calculating the train length according to a displacement value during the two times of reading, and comparing the train length with the actual train length.

10. The method according to claim 8, wherein making second pre-judgment by the TMIS on whether the train is integral currently in Step (6) specifically comprises:
making judgment by the TMIS on whether a head locomotive number and a tail carriage number corresponding to the two electronic tag numbers of the RFID electronic tags mounted to the head carriage and tail carriage of the train that are read by the RFID reader 2 belong to the head carriage and tail carriage of the current train according to the information stored in the database, calculating the train length according to a displacement value during the two times of reading, and comparing the train length with the actual train length.

## Patentansprüche

1. Vorrichtung zur Erkennung der Zugvollständigkeit basierend auf RFID-Technologie, wobei die Vorrichtung RFID-Etiketten umfasst, die an einem führenden Wagen und an einem letzten Wagen eines Zugs, der einer Zugvollständigkeitserkennung unterzogen wird, angebracht sind, wobei der Zug eine Lokomotive, RFID-Lesegeräte und ein System zur Erkennung der Zugvollständigkeit umfasst, wobei
die RFID-Lesegeräte auf einem Gleis oder an der Gleisseite angebracht sind und dazu konfiguriert sind, die RFID-Etiketten am führenden Wagen und am letzten Wagen eines Zugs zu lesen und anschließend gelesene Informationen mittels Kommunikationseinheiten der RFID-Lesegeräte an ein Zugvollständigkeitserkennungssystem der Lokomotive zu senden; und
das Zugvollständigkeitserkennungssystem dazu konfiguriert ist, die Länge des Zugs basierend auf gespeicherten Daten des führenden Wagens und des letzten Wagens, die den RFID-Etiketten entsprechen, einem Intervallzeitwert, der durch das Lesen der RFID-Etiketten am führenden Wagen und am letzten Wagen des Zugs definiert ist, sowie der aktuellen Geschwindigkeit und Verschiebung des Zugs zu berechnen, um die Zugvollständigkeit zu bestimmen.

2. Vorrichtung nach Anspruch 1, wobei das Zugvollständigkeitserkennungssystem dazu konfiguriert ist, nach Empfang der RFID-Etiketteninformationen des führenden Wagens und des letzten Wagens des Zugs, gesendet durch zwei RFID-Lesegeräte, die eine Gruppe am Boden bilden, die Zuglänge jeweils basierend auf den vom ersten und zweiten RFID-Lesegerät zurückgemeldeten RFID-Etikettendaten des führenden und des letzten Wagens und einem tatsächlichen Intervall Tb zu berechnen.

3. Vorrichtung nach Anspruch 2, wobei die Zuglänge wie folgt berechnet wird:
L1w = LC1s - LC1w, und L2w = LC2s - LC2w, wobei
L1w eine durch ein erstes RFID-Lesegerät der Gruppe berechnete Zuglänge bezeichnet, L2w eine durch ein zweites RFID-Lesegerät der Gruppe berechnete Zuglänge bezeichnet, LC1s einen Verschiebungswert bezeichnet, wenn das erste RFID-Lesegerät der Gruppe das RFID-Etikett am führenden Wagen des Zugs liest, LC1w einen Verschiebungswert bezeichnet, wenn das erste RFID-Lesegerät das RFID-Etikett am letzten Wagen des Zugs liest, LC2s einen Verschiebungswert bezeichnet, wenn das zweite RFID-Lesegerät der Gruppe das RFID-Etikett am führenden Wagen des Zugs liest, und LC2w einen Verschiebungswert bezeichnet, wenn das zweite RFID-Lesegerät der Gruppe das RFID-Etikett am letzten Wagen des Zugs liest; und
nur wenn die Zuglängen L1w und L2w vollständig berechnet wurden, gilt der Zug als vollständig im Sinne der Zugvollständigkeitserkennung.

4. Vorrichtung nach Anspruch 1, wobei die RFID-Etiketten auf beiden Seiten der Wagen angebracht sind und in einer Höhe montiert sind, die der Montageshöhe der RFID-Lesegeräte entspricht; oder wobei die RFID-Etiketten an der Gleisseite angebracht sind und höher als die untersten Kanten der Wagenkörper angebracht sein müssen.

5. Vorrichtung nach Anspruch 1, wobei die RFID-Lesegeräte in der Mitte des Gleises angebracht sind und die RFID-Etiketten sich im unteren Zentrum eines Fahrzeugs befinden.

6. Vorrichtung nach Anspruch 1, wobei der Inhalt der in jedem der RFID-Etiketten gespeicherten Identifikationsdaten Etiketten-IDs, Liniencodes, Bereichscodes, Stationscodes und Geschwindigkeitsstufeninformationen umfasst.

7. Vorrichtung nach Anspruch 1, wobei empfangene RFID-Etiketten von den RFID-Lesegeräten an ein bodengebundenes Zugleitzentralsystem gesendet und dann durch das bodengebundene Zugleitzentralsystem an das Zugvollständigkeitserkennungssystem weitergeleitet werden.

8. Verfahren zur Verwendung der Vorrichtung zur Erkennung der Zugvollständigkeit basierend auf der RFID-Technologie gemäß Anspruch 1, wobei das Verfahren folgende Schritte umfasst:
Schritt (1): Wenn das RFID-Lesegerät 1, das am Boden angeordnet ist, das RFID-Etikett liest, das am führenden Wagen des Zugs angebracht ist, sendet das RFID-Lesegerät 1 die Etikettennummer des RFID-Etiketts des führenden Wagens an das bodengebundene Zugleitzentralsystem, überträgt anschließend die Etikettennummer an das bordeigene Zugvollständigkeitserkennungssystem (TMIS), und das TMIS ruft anhand von Zuginformationen, die der Etikettennummer entsprechen, die Lokomotivinformation des führenden Wagens aus einer Datenbank ab und zeichnet Geschwindigkeit, Verschiebung und Zeit des aktuellen Zugs auf;
Schritt (2): Wenn das RFID-Lesegerät 1, das am Boden angeordnet ist, das RFID-Etikett liest, das am letzten Wagen des Zugs angebracht ist, sendet das RFID-Lesegerät 1 die Etikettennummer des RFID-Etiketts des letzten Wagens an das bodengebundene Zugleitzentralsystem, überträgt anschließend die Etikettennummer an das bordeigene Zugvollständigkeitserkennungssystem (TMIS), und das TMIS ruft anhand von Zuginformationen, die der Etikettennummer entsprechen, die Lokomotivinformation des letzten Wagens aus der Datenbank ab und zeichnet Geschwindigkeit, Verschiebung und Zeit des aktuellen Zugs auf;
Schritt (3): Durchführung einer ersten Vorprüfung durch das TMIS, ob der Zug derzeit vollständig ist;
Schritt (4): Wenn das RFID-Lesegerät 2, das am Boden angeordnet ist, das RFID-Etikett liest, das am führenden Wagen des Zugs angebracht ist, sendet das RFID-Lesegerät 2 die Etikettennummer an das bodengebundene Zugleitzentralsystem, überträgt anschließend die Etikettennummer an das bordeigene Zugvollständigkeitserkennungssystem (TMIS), und das TMIS ruft anhand von Zuginformationen, die der Etikettennummer entsprechen, die Lokomotivinformation des führenden Wagens aus der Datenbank ab und zeichnet Geschwindigkeit, Verschiebung und Zeit des aktuellen Zugs auf;
Schritt (5): Wenn das RFID-Lesegerät 2 das am letzten Wagen angebrachte RFID-Etikett liest, sendet das RFID-Lesegerät 2 die Etikettennummer des letzten Wagens an das bodengebundene Zugleitzentralsystem, überträgt anschließend die Etikettennummer an das TMIS, und das TMIS ruft anhand von Zuginformationen, die der Etikettennummer entsprechen, die Lokomotivinformation des letzten Wagens aus der Datenbank ab und zeichnet Geschwindigkeit, Verschiebung und Zeit des aktuellen Zugs auf;
Schritt (6): Durchführung einer zweiten Vorprüfung durch das TMIS, ob der Zug derzeit vollständig ist;
Schritt (7): Berechnung des Zustands der Zugvollständigkeit durch das TMIS basierend auf den von den beiden RFID-Lesegeräten zurückgegebenen Werten, wobei die Beurteilungsbedingung wie folgt lautet: wenn die Beurteilung der Zugvollständigkeit zweimal erfüllt ist, gilt der Zug als aktuell vollständig; andernfalls gilt der Zug als nicht vollständig; und
Schritt (8): Wenn der Zug nicht vollständig ist, wird ein Zugvollständigkeitsausfallalarm an ein bordeigenes ATP-System gesendet.

9. Verfahren nach Anspruch 8, wobei die erste Vorprüfung durch das TMIS gemäß Schritt (3), ob der Zug derzeit vollständig ist, insbesondere Folgendes umfasst:
Beurteilung durch das TMIS, ob eine Lokomotivnummer des führenden Wagens und eine Nummer des letzten Wagens, die den beiden Etikettennummern der RFID-Etiketten am führenden Wagen und am letzten Wagen entsprechen und vom RFID-Lesegerät 1 gelesen wurden, zu dem aktuellen Zug gehören, basierend auf den in der Datenbank gespeicherten Informationen, Berechnung der Zuglänge anhand eines Verschiebungswerts während der beiden Lesevorgänge und Vergleich der Zuglänge mit der tatsächlichen Zuglänge.

10. Verfahren nach Anspruch 8, wobei die zweite Vorprüfung durch das TMIS gemäß Schritt (6), ob der Zug derzeit vollständig ist, insbesondere Folgendes umfasst:
Beurteilung durch das TMIS, ob eine Lokomotivnummer des führenden Wagens und eine Nummer des letzten Wagens, die den beiden Etikettennummern der RFID-Etiketten am führenden Wagen und am letzten Wagen entsprechen und vom RFID-Lesegerät 2 gelesen wurden, zu dem aktuellen Zug gehören, basierend auf den in der Datenbank gespeicherten Informationen, Berechnung der Zuglänge anhand eines Verschiebungswerts während der beiden Lesevorgänge und Vergleich der Zuglänge mit der tatsächlichen Zuglänge.

## Revendications

1. Un dispositif de détection de l'intégrité du train basé sur une technologie RFID, le dispositif comprenant des étiquettes électroniques RFID montées sur une voiture de tête et sur une voiture de queue d'un train soumis à une détection d'intégrité du train, le train comprenant une locomotive, des lecteurs RFID et un système de détection d'intégrité du train,
dans lequel les lecteurs RFID sont montés sur une voie au sol ou en bordure de voie et sont configurés pour lire les étiquettes électroniques RFID de la voiture de tête et de la voiture de queue d'un train, puis envoyer les informations lues à un système de détection d'intégrité du train de la locomotive au moyen d'unités de communication des lecteurs RFID ; et
le système de détection d'intégrité du train est configuré pour calculer la longueur du train selon les données enregistrées relatives à la voiture de tête et à la voiture de queue correspondant aux étiquettes électroniques RFID, un temps d'intervalle défini par la lecture des étiquettes électroniques RFID sur la voiture de tête et la voiture de queue du train, ainsi que la vitesse et le déplacement actuels du train, de manière à calculer l'intégrité du train.

2. Le dispositif selon la revendication 1, dans lequel le système de détection d'intégrité du train est configuré pour calculer, après réception des informations RFID des voitures de tête et de queue du train envoyées par les deux lecteurs RFID formant un groupe au sol, la longueur du train respectivement selon les données RFID des voitures de tête et de queue renvoyées par les deux lecteurs RFID et un intervalle réel Tb.

3. Le dispositif selon la revendication 2, dans lequel la longueur du train est calculée comme suit :
L1w = LC1s - LC1w et L2w = LC2s - LC2w, dans lequel
L1w représente une longueur de train calculée par un premier lecteur RFID du groupe, L2w représente une longueur de train calculée par un second lecteur RFID du groupe, LC1s représente une valeur de déplacement lorsque le premier lecteur RFID lit l'étiquette électronique RFID de la voiture de tête du train, LC1w représente une valeur de déplacement lorsque le premier lecteur RFID lit l'étiquette RFID de la voiture de queue du train, LC2s représente une valeur de déplacement lorsque le second lecteur RFID lit l'étiquette RFID de la voiture de tête du train, et LC2w représente une valeur de déplacement lorsque le second lecteur RFID lit l'étiquette RFID de la voiture de queue du train ; et
ce n'est que lorsque les longueurs de train L1w et L2w sont complètement calculées que le train est considéré comme conforme à la détection d'intégrité.

4. Le dispositif selon la revendication 1, dans lequel les étiquettes électroniques RFID sont montées sur les deux côtés des voitures et sont fixées à une hauteur correspondant à la hauteur de montage des lecteurs RFID ; ou les étiquettes électroniques RFID sont montées en bordure de voie et doivent être plus hautes que les bords inférieurs des carrosseries des voitures.

5. Le dispositif selon la revendication 1, dans lequel les lecteurs RFID sont montés au centre de la voie, et les étiquettes électroniques RFID sont montées au centre inférieur d'un véhicule.

6. Le dispositif selon la revendication 1, dans lequel les contenus des données d'identification stockées dans chacune des étiquettes électroniques RFID comprennent des identifiants d'étiquette, des codes de ligne, des codes de zone, des codes de station et des informations de niveau de vitesse.

7. Le dispositif selon la revendication 1, dans lequel les étiquettes électroniques reçues sont envoyées par les lecteurs RFID à un système de centre de contrôle ferroviaire au sol, puis sont transmises au système de détection d'intégrité du train par ledit centre de contrôle au sol.

8. Un procédé d'utilisation du dispositif de détection d'intégrité du train basé sur une technologie RFID selon la revendication 1, le procédé comprenant les étapes suivantes :
Étape (1), lorsque le lecteur RFID 1 disposé au sol lit l'étiquette électronique RFID montée sur la voiture de tête du train, envoi, par le lecteur RFID 1, d'un numéro d'étiquette électronique de l'étiquette RFID de la voiture de tête du train au système de centre de contrôle ferroviaire au sol, puis transmission du numéro d'étiquette électronique à un système de détection d'intégrité du train embarqué (TMIS), et acquisition, par le TMIS, d'informations sur la locomotive de tête du train en fonction des informations du train correspondant au numéro d'étiquette électronique dans une base de données, et enregistrement de la vitesse, du déplacement et du moment du train en cours ;
Étape (2), lorsque le lecteur RFID 1 disposé au sol lit l'étiquette électronique RFID montée sur la voiture de queue du train, envoi, par le lecteur RFID 1, du numéro d'étiquette électronique de l'étiquette RFID de la voiture de queue au système de centre de contrôle ferroviaire au sol, puis transmission du numéro d'étiquette au système TMIS embarqué, et acquisition, par le TMIS, d'informations sur la voiture de queue du train en fonction des informations du train correspondant au numéro d'étiquette dans la base de données, et enregistrement de la vitesse, du déplacement et du moment du train en cours ;
Étape (3), première pré-vérification par le TMIS pour déterminer si le train est actuellement intègre ;
Étape (4), lorsque le lecteur RFID 2 disposé au sol lit l'étiquette RFID montée sur la voiture de tête du train, envoi, par le lecteur RFID 2, du numéro d'étiquette électronique au système de centre de contrôle ferroviaire au sol, puis transmission du numéro d'étiquette au TMIS embarqué, et acquisition, par le TMIS, d'informations sur la locomotive de tête du train en fonction des informations du train correspondant au numéro d'étiquette électronique dans la base de données, et enregistrement de la vitesse, du déplacement et du moment du train en cours ;
Étape (5), lorsque le lecteur RFID 2 lit l'étiquette RFID montée sur la voiture de queue du train, envoi, par le lecteur RFID 2, du numéro d'étiquette de la voiture de queue au système de centre de contrôle ferroviaire au sol, puis transmission du numéro d'étiquette au TMIS, et acquisition, par le TMIS, d'informations sur la voiture de queue du train en fonction des informations du train correspondant au numéro d'étiquette électronique dans la base de données, et enregistrement de la vitesse, du déplacement et du moment du train en cours ;
Étape (6), deuxième pré-vérification par le TMIS pour déterminer si le train est actuellement intègre ;
Étape (7), calcul, par le TMIS, de l'état d'intégrité du train selon les valeurs retournées par les deux lecteurs RFID, avec les conditions de jugement suivantes : si la condition d'intégrité du train est remplie deux fois, le train est considéré comme étant actuellement intègre ; sinon, le train est considéré comme non intègre ; et
Étape (8), si le train n'est pas intègre, envoi d'une alarme de perte d'intégrité du train à un ATP embarqué.

9. Le procédé selon la revendication 8, dans lequel la première pré-vérification par le TMIS à l'étape (3), pour déterminer si le train est actuellement intègre, comprend spécifiquement :
vérification, par le TMIS, si le numéro de locomotive de tête et le numéro de voiture de queue correspondant aux deux numéros d'étiquettes électroniques des étiquettes RFID montées sur la voiture de tête et la voiture de queue du train lus par le lecteur RFID 1 appartiennent bien à la voiture de tête et à la voiture de queue du train en cours selon les informations stockées dans la base de données, calcul de la longueur du train selon une valeur de déplacement entre les deux lectures, et comparaison de la longueur du train avec la longueur réelle du train.

10. Le procédé selon la revendication 8, dans lequel la deuxième pré-vérification par le TMIS à l'étape (6), pour déterminer si le train est actuellement intègre, comprend spécifiquement :
vérification, par le TMIS, si le numéro de locomotive de tête et le numéro de voiture de queue correspondant aux deux numéros d'étiquettes électroniques des étiquettes RFID montées sur la voiture de tête et la voiture de queue du train lus par le lecteur RFID 2 appartiennent bien à la voiture de tête et à la voiture de queue du train en cours selon les informations stockées dans la base de données, calcul de la longueur du train selon une valeur de déplacement entre les deux lectures, et comparaison de la longueur du train avec la longueur réelle du train.
